(19) Europäisches Patentamt
European Patent Office
Office européen des brevets

(11) Veröffentlichungsnummer: **0 542 114 A1**

(12) # EUROPÄISCHE PATENTANMELDUNG

(21) Anmeldenummer: **92118845.4**

(22) Anmeldetag: **04.11.92**

(51) Int. Cl.[5]: **C09J 175/04**, C08K 3/00, //(C09J175/04,161:06,163:00)

(30) Priorität: **15.11.91 DE 4137556**

(43) Veröffentlichungstag der Anmeldung: **19.05.93 Patentblatt 93/20**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Wallon, Alexander, Dr.**
**Raiffeisenstrasse 13a**
**W-6733 Hassloch(DE)**
Erfinder: **Maempel, Lothar, Dr.**
**Spraulache 12b**
**W-6835 Bruehl(DE)**
Erfinder: **Seibert, Horst**
**Bolander Weg 7**
**W-6701 Fussgoenheim(DE)**
Erfinder: **Fuessl, Ruediger**
**Neubergstrasse 30**
**W-6730 Neustadt(DE)**

(54) **Wässrige Polyurethandispersionen.**

(57) Die Erfindung betrifft wäßrige Dispersionen, enthaltend

| | |
|---|---|
| A) 96,95 bis 45 Gew.-% | eines Polyurethans |
| B) 3,0 bis 50 Gew.-% | eines Phenol-Formaldehyd-Kondensationsharzes oder eines Epoxidharzes und |
| C) 0,05 bis 5,0 Gew.-% | eines anorganischen Salzes mit einer Löslichkeit kleiner 1 g/l in Wasser bei 20 °C. |

wobei sich die Gewichtsprozente auf die Summe der Komponenten A), B) und C) beziehen.

EP 0 542 114 A1

Die Erfindung betrifft wäßrige Dispersionen, enthaltend

A) 96,95 bis 45 Gew.-% eines Polyurethans,

B) 3,0 bis 50 Gew.-% eines Phenol-Formaldehyd-Kondensationsharzes oder eines Epoxidharzes und

C) 0,05 bis 5,0 Gew.-% eines anorganischen Salzes mit einer Löslichkeit kleiner 1 g/l Lösung in Wasser bei 20 °C.

wobei sich die Gewichtsprozente auf die Summe der Komponenten A), B) und C) beziehen.

Aus der deutschen Patentanmeldung 40 24 567 und der DE-A-39 03 538 sind Dispersionen, welche ein Polyurethan und ein Phenol-Formaldehydharz oder Epoxidharz enthalten, bekannt. Die Dispersionen eignen sich aufgrund einer guten Anfangshaftfestigkeit insbesondere als Kontaktkleber. Für viele Anwendungen ist die Wärmestandfestigkeit, d.h. die Belastbarkeit von Verklebungen bei höheren Temperaturen, von besonderer Bedeutung.

Aufgabe der vorliegenden Erfindung war es daher, wäßrige Dispersionen zur Verfügung zu stellen, welche bei der Verwendung als Klebstoff insbesondere auch eine sehr gute Wärmestandfestigkeit aufweisen.

Demgemäß wurden die eingangs definierten wäßrigen Dispersionen gefunden.

Die erfindungsgemäße Dispersion enthält 96,95 bis 45,0, vorzugsweise 94,8 bis 62 Gew.-%, ganz besonders bevorzugt 94-68 Gew. -%, eines Polyurethans A) . Die Gewichtsprozente beziehen sich auf die Summe der Komponenten A), B) und C).

Das Polyurethan ist im wesentlichen, vorzugsweise ausschließlich, aufgebaut aus den Komponenten (a) bis (e). Bei den gegenüber Isocyanat reaktiven funktionellen Gruppen handelt es sich um Hydroxyl-, primäre oder sekundäre Aminogruppen.

Als organische Polyisocyanate (a) sind insbesondere aliphatische, cycloaliphatische und aromatische Diisocyanate geeignet. Vorzugsweise werden solche mit der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einen aromatischen Kohlenwasserstoffrest mit 6 bis 15 C-Atomen steht.

Geeignete aliphatische, cycloaliphatische und aromatische Diisocyanate sind z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocanat, 4,4'-Diisocyanatodiphenylmethan, 4,4'-Diisocyanatodicyclohexylmethan, 2,4- und 2,6-Toluylendiisocyanat.

Es können auch Gemische der Diisocyanate eingesetzt werden. Insbesondere haben sich Gemische von aliphatischen bzw. cycloaliphatischen Diisocyanaten mit aromatischen Diisocyanten im Molverhältnis von 1:4 bis 5:1 als geeignet erwiesen.

Neben den Diisocyanaten können in untergeordneten Mengen auch Monoisocyanate zur Molekulargewichtsregulierung eingesetzt werden. Bei Mitverwendung von höherfunktionellen Isocyanaten, z.B. Tri- oder Tetraisocyanaten, werden verzweigte Strukturen erhalten.

Geeignete Polyhydroxylverbindungen (b) mit einem Molekulargewicht über 500 bis 6000 sind insbesondere Polyester, Polyether, Polythioether, Polylactone, Polyacetale, Polycarbonate oder Polyesteramide mit mindestens 2 Hydroxylgruppen. Bevorzugt sind Dihydroxylverbindungen, insbesondere solche deren Molekulargewicht zwischen 750 und 3000 liegt. Selbstverständliche können auch Gemische dieser Dihydroxylverbindungen eingesetzt werden.

Vorzugsweise sind die Polyurethane durch einen Gehalt an Komponenten c) oder d) selbstdispergierbar in Wasser. Auf den Zusatz von Emulgatoren oder Dispergierhilfsmitteln kann dann verzichtet werden. Bevorzugt ist das Polyurethan durch einen Gehalt von lediglich c) wasserdispergierbar.

Bei Komponente c) handelt es sich um Verbindungen mit mindestens einer gegenüber Isocyanat reaktiven Gruppe und mindestens einer ionischen oder in eine ionische Gruppe überführbaren Gruppe.

Als Komponente (c) geeignet sind z.B. aliphatische, cycloaliphatische oder aromatische Mono- oder Dihydroxycarbonsäuren. Bevorzugt sind Dihydroxyalkylcarbonsäuren, insbesondere mit 3 bis 10 C-Atomen, wie sie auch in der US-A-3 412 054 beschrieben sind. Insbesondere bevorzugt sind Verbindungen der allgemeinen Formel

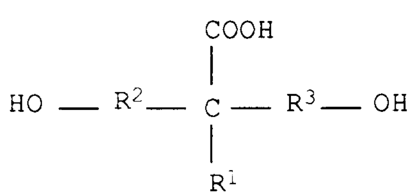

in welcher $R^1$ für ein Wasserstoffatom oder einen Alkylrest mit 1 bis 4 Kohlenstoffatomen und $R^2$ sowie $R^3$ für eine $C_1-C_4$-Alkylengruppe stehen. Beispielsweise genannt sei 2,2-Dimethylolpropionsäure.

Erwähnenswert sind weiterhin eine oder zwei Hydroxylgruppen bzw. Aminogruppen enthaltende tertiäre Ammoniumsalze sowie Aminocarbonsäuren oder Aminosulfonsäuren z.B. Lysin, $\beta$-Alanin, N-(2-Amino-ethyl)-2-aminoethansulfonsäure und die in der DE-A-20 34 479 genannten Addukte von aliphatischen diprimären Diaminen an $\alpha$-olefinische Carbonsäuren, z.B. das Addukt von Ethylendiamin an Acrylsäure.

Aufbaukomponente (c) enthält Ionengruppen bzw. in Ionengruppen überführbare Gruppen, um die Dispergierbarkeit des Polyurethans in Wasser zu gewährleisten. Zu diesem Zweck beträgt ihr Anteil üblicherweise 0,03 bis 0,5 Grammäquivalent, vorzugsweise 0,05-0,4 Grammäquivalent, bezogen auf 1 Mol Isocyanatgruppen.

Zur Überführung von potentiellen anionischen Gruppen, z.B. Carbonsäuregruppen oder Sulfonsäuregruppen in Ionengruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung der potentiellen kationischen Gruppen, z.B. der tertiären Aminogruppen in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyljodid, Dimethylsulfat, Benzylchlorid, Chloressigethylester oder Bromacetamid geeignet. Weitere geeignete Neutralisations- und Quarternierungsmittel sind z.B. in der US-PS 3 479 310, Spalte 6, beschrieben.

Die Neutralisation bzw. Quaternisierung der ionischen oder der potentiell ionischen Gruppen kann vor, während und insbesondere nach der Isocyanat-Polyadditionsreaktion erfolgen.

Bei den gegebenenfalls mitzuverwendenden Komponenten (d) handelt es sich um nichtionische Emulgatoren mit mindestens einer gegenüber Isocyanat reaktiven Gruppe. Sie enthalten keine ionische Gruppe oder in eine ionische Gruppe überführbare Gruppe. Bevorzugt werden einwertige Polyetheralkohole des Molgewichtsbereiches 500 bis 10 000 g/mol, vorzugsweise von 1 000 bis 5 000 g/mol. Einwertige Polyetheralkohole sind durch Alkoxylierung von einwertigen Startermolekülen, wie beispielsweise Methanol, Ethanol oder n-Butanol erhältlich, wobei als Alkoxylierungsmittel Ethylenoxid oder Gemische von Ethylenoxid mit anderen Alkylenoxiden, besonders Propylenoxid eingesetzt werden. Im Falle der Verwendung von Alkylenoxidgemischen enthalten diese jedoch vorzugsweise mindestens 40, besonders bevorzugt mindestens 65 Mol-% Ethylenoxid.

Aufbaukomponenten (e) sind von c) und d) verschiedene Verbindungen mit mindestens zwei gegenüber Isocyanat reaktiven Gruppen und einem Molekulargewicht von 60 bis 500 g/mol. Im wesentlichen handelt es sich um Verbindungen, welche zwei Hydroxylgruppen, zwei Aminogruppen oder eine Hydroxyl- und eine Aminogruppe enthalten. In Betracht kommen z.B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-aminomethyl- 3,5,5-trimethyl-cyclohexan (Isophorondiamin), 4,4'-Diaminodicyclohexylmethan, 2,4-Diamino-cyclohexan, 1,2-Diamino-propan, Hyrazin oder Aminoalkohole wie Ethanolamin, Isopropanolamin, Methylethanolamin oder Aminoethoxyethanol. Durch Mitverwendung von höherfunktionellen Komponenten e) werden Verzweigungen im Polyurethan erhalten, durch welche die Wärmestandfestigkeit noch weiter erhöht werden kann.

Die Anteile der Komponenten a) bis e) werden insbesondere so gewählt, daß die Summe der gegenüber Isocyanat reaktiven Hydroxyl- oder Aminogruppen 0,9 bis 1,1, bevorzugt 0,95 bis 1,05 Grammäquivalente gegenüber 1 Grammäquivalent Isocyanat beträgt.

Besonders bevorzugt entsprechen die gegenüber Isocyanat reaktiven funktionellen Gruppen in ihrer Anzahl ungefähr den Isocyanatgruppen.

Der Anteil der einzelnen Komponenten bezogen auf 1 Grammäquivalent Isocyanat beträgt insbesondere

0,1-0,8, bevorzugt 0,2-0,8 Grammäquivalente der Komponenten (b)
0-0,4, bevorzugt 0,05-0,4 Grammäquivalente der Komponenten (c)
0-0,4, bevorzugt 0-0,3 Grammäquivalente der Komponenten (d)
0-0,8, bevorzugt 0,1-0,6 Grammäquivalente der Komponenten (f)

Zur Herstellung des Polyurethans können die Aufbaukomponenten (a) bis (e) in einem niedrig siedenden, mit Wasser mischbaren organischen Lösungsmittel in bekannter Weise umgesetzt werden, wie es z.B. auch in der DE-A-34 37 918 beschrieben ist.

Als Lösungsmittel sind z.B. Tetrahydrofuran, Methylethylketon, N-Methylpyrrolidon und insbesondere Aceton empfehlenswert.

Die Reaktionstemperatur liegt vorzugsweise bei 50 bis 100 °C.

Zur Beschleunigung der Reaktion der Diisocyanate können übliche und bekannte Katalysatoren, wie Dibutylzinndilaurat, Zinn-II-octoat oder 1,4-Diazabicyclo-(2,2,2)-octan, mitverwendet werden.

Das erhaltene Polyurethan wird dann in Wasser dispergiert und das organische Lösungsmittel durch Destillation im gewünschten Ausmaß, im allgemeinen vollständig, entfernt.

Die Herstellung des Polyurethans kann auch in der Weise erfolgen, daß in dem niedrig siedenden mit Wasser mischbaren organischen Lösungsmittel zunächst ein Polyurethanprepolymer hergestellt wird. Insbesondere werden dazu zumindest die Aufbaukomponenten (a) und (b) und Teile von c) miteinander umgesezt. Das erhaltene Polyurethanprepolymer wird dann in Wasser dispergiert. Danach kann die weitere Umsetzung mit weiteren Aufbaukomponenten erfolgen. Anschließend kann, wie bereits oben beschrieben, das organische Lösungsmittel entfernt werden.

Die erfindungsgemäße Dispersion enthält weiterhin 3,0 bis 50 Gew.-%, insbesondere 5,0 bis 35 Gew.-% ganz besonders bevorzugt 5-30 Gew.-% eines Phenol-Formaldehyd-Kondensationsharzes oder eines Epoxidharzes B). Bevorzugt ist das PhenolFormaldehyd-Kondensationsharz.

Insbesondere handelt es sich beim Phenol-Formaldehyd-Kondensationsharz um ein solches mit Molgewichten (Gewichtsmittel $\overline{M}_w$) zwischen 500 und 2000 sowie Erweichungstemperaturen (nach DIN 53 736 bestimmt) im Bereich zwischen 80 und 130 °C.

Besonders bevorzugt handelt es sich bei den Phenol-Formaldehyd-Kondensationsharzen um Novolacke, wie sie durch sauer katalytisierte Umsetzung von Phenolen, insbesondere Phenol mit Formaldehyd erhältlich sind. Insbesondere werden bei der Umsetzung 1,05 bis 1,3 Mol Phenole auf 1 Mol Formaldehyd eingesetzt.

Insbesondere eignen sich auch Epoxidharze, vorzugsweise Umsetzungsprodukte von Epoxiden z.B. Epichlorhydrin mit Bisphenol A; bevorzugt sind solche mit Molgewichten (Gewichtsmittel $\overline{M}_w$) zwischen 500 und 5000 und Erweichungstemperaturen im Bereich zwischen 80 und 130 °C.

Als Komponente C) enthält die wäßrige Dispersion 0,05 bis 5,0, vorzugsweise 0,2 bis 3,0 Gew.-% besonders bevorzugt 1 bis 2 Gew.-% mindestens einer in Wasser schwerlöslichen anorganischen Verbindung mit einer Löslichkeit kleiner 1,0 g/l Lösung vorzugsweise kleiner 0,5 g/l Lösung bei 20 °C in Wasser. Vorzugsweise sollte die Löslichkeit jedoch größer als 0,1 mg/l Lösung bei 20 °C sein.

Als anorganische Verbindungen sind geeignet die Sulfide, Arsenide, Telluride, Selenide, Sulfosalze, Oxide, Hydroxide, Carbonate, Phosphate, Molybdate, Sulfate, Borate, Halide, Stannate und Silikate der Metalle der II.-V. Hauptgruppe sowie der Übergangselemente. Besonders bevorzugt sind hier die Metalloxide, insbesondere von zweiwertigen Metallen, z. B. Zink- und besonders bevorzugt Magnesiumoxid. Ebenso einsetzbar sind die entsprechenden Metallsalze der organischen Carbon-, Sulfon- und Phosphonsäuren, insbesondere die Erdalkalisalze der Oxalsäure, wobei besonders das Calciumoxalat bevorzugt ist.

Die Verbindungen sollten vorteilhafterweise in feinteiliger Form mit einem mittleren Teilchendurchmesser ($d_{50}$-Wert, Gewichtsmittel) zwischen 500 $\mu$m und 50 nm, bevorzugt zwischen 250 $\mu$m und 50 nm vorliegen.

Der Feststoffgehalt der erfindungsgemäßen Dispersionen liegt vorzugsweise zwischen 10 und 70, besonders bevorzugt zwischen 20 und 50 Gew.-%.

Die erfindungsgemäße Dispersion kann z.B. durch Mischen einer wäßrigen Polyurethandispersion, einer wäßrigen Dispersion oder Lösung eines Phenol-Formaldehydkondensationsharzes oder Epoxidharzes und des anorganischen Salzes hergestellt werden. Soweit notwendig, können Emulgatoren und Dispergierhilfsmittel zugesetzt werden.

Die anorganischen Verbindungen können prinzipiell zu jedem Zeitpunkt vor während, oder nach der Herstellung der Polyurethan-Dispersion z. B. in fester Form zugegeben werden. Bevorzugt ist jedoch die Ausführungsform, bei der sie in Form einer wäßrigen Aufschlämmung, die 5-30 Gew.-% Feststoff enthält, zu der bereits fertigen Polyurethandispersion zugegeben werden. Insbesondere kann die anorganische Verbindung in Form einer Dispersion zugegeben werden. Zu deren Herstellung wird das Salz mit starken Scherkräften und in Gegenwart eines Emulgators, wie z.B. Polyacrylsäure mit einem Molgewicht ($M_n$) von 100-4000, bzw. deren Na-Salze, Maleinsäureanhydrid-Methylvinylether-Co-polymerisaten mit $M_n$ = 10000-70000 oder Maleinsäure/Olefin-Co-polymerisaten, mit $M_n$ = 8000-12000, bzw. deren Na-Salze, in Wasser emulgiert.

Vorzugsweise werden die Polyurethandispersionen in der Art hergestellt, daß das Phenol-Formaldehydharz bzw. das Epoxidharz der Polyurethandispersion bzw. der Dispersion eines Polyurethanprepolymeren vor der Dispergierung in Wasser zugesetzt wird. Im Falle des Prepolymeren erfolgt dann in Wasser die weitere Umsetzung zum Polyurethan. Auf diese Weise werden stabile wäßrige Dispersionen erhalten, in denen sich das zugesetzte Phenol-Formaldehyd-Kondensationsharz oder Epoxidharz mutmaßlich im Innern der Dispersionsteilchen befindet und von einer stabilisierenden Polyurethanschicht umhüllt wird.

Diese Herstellungsweise ist z.B. in der DE-A-39 03 538 beschrieben.

Die erfindungsgemäßen Dispersionen eignen sich insbesondere zur Verwendung als Kontaktkleber, zum Beispiel zum Verkleben von Holz, Kunststoff, Glas oder Metall. Zur Erzielung spezieller Eigenschaften können den Dispersionen weitere Zusatzstoffe wie Weichmacher, Filmbildehilfsmittel, Füllstoffe etc. zugesetzt werden. Vorteilhafterweise werden bei der Kontaktverklebung die Oberflächen beider zu verklebender Substrate mit der Dispersion beschichtet.

Die erhaltenen Verklebungen weisen neben einer guten Anfangshaftfestigkeit insbesondere eine sehr gute Wärmestandfestigkeit auf.

Beispiele

Abkürzungen

| | |
|---|---|
| TDI | Toluylendiisocyanat |
| HDI | Hexamethylendiisocyanat |
| DBT | Dibutylzinndilaurat |
| PUD-Salz | Na-Salz des Michael-Addukts aus Acrylsäure und Ethylendiamin |
| DMPA | Dimethylolpropionsäure |

Beispiele

Vergleichsbeispiel 1

Der Mischung aus entwässertem Polyesterol, hergestellt aus Adipinsäure, Aceton I und Katalysator wurde bei 60°C das TDI zugegeben. Nach einer Stunde Reaktionszeit bei 65°C wurde das HDI und zwei weiteren Stunden Reaktionszeit bei 70°C wurde das Aceton II zugesetzt, die Reaktionsmischung hatte dann einen NCO-Gehalt von 0,7 Gew.-%.

Bei 50°C wurde mit PUD-Salz, das als 40%ige Lösung in Wasser vorlag, kettenverlängert. Nach 5 Minuten wurde die Harzlösung, hergestellt aus Aceton III und einem Phenol-Formaldehyd-Kondensat, zugesetzt und 5 Minuten bei 50°C gerührt. Anschließend wurde mit Wasser dispergiert und das Aceton abdestilliert.

Die entstandende feinteilige Dispersion hat einen Feststoffgehalt von 41 Gew.-%.

| | Molmenge [mmol] | Gewichtsteile [g] |
|---|---|---|
| Polyesterdiol (OH-Z. = 46,5) | 202 | 488 |
| TDI | 147 | 25,6 |
| HDI | 147 | 24,7 |
| DBTL | | 0,1 |
| Aceton I | | 132 |
| | | |
| Aceton II | | 526 |
| PUD-Salz (40%ig) | 93 | 40,5 |
| Phenol-Formaldehyd-Kondensat, $M_w$ = etwa 600-1200<br>Erweichungstemperatur 90-110°C | | 240 |
| Aceton III | | 240 |
| entiontes Wasser | | 1200 |

Vergleichsbeispiel 2

Der Mischung aus entwässertem poly-Tetrahydrofuran, DMPA, 1,4-Dihydroxybutan, Trimethylolpropan, Aceton I und Katalysator wurde das TDI zugegeben. Nach einer Stunde Reaktionszeit bei 65°C wurde

das HDI zugesetzt und die Umsetzung weitere 90 Minuten fortgesetzt. Nach Zulauf von Aceton II hat die Reaktionsmischung einen NCO – Gehalt von 0,60 Gew. – %.

Bei 50 °C wurde mit PUD – Salz, das als 40%ige Lösung in Wasser vorlag, kettenverlängert. Nach 5 Minuten wurde die Harzlösung, hergestellt aus Aceton III und einem Phenol – Formaldehyd – Kondensat, zugesetzt und 5 Minuten bei 50 °C gerührt. Anschließend wurde mit Wasser dispergiert und das Aceton abdestilliert.

Die entstandene feinteilige Dispersion hat einen Feststoffgehalt von 41 Gew. – %.

| | Molmenge [mmol] | Gewichtsteile [g] |
|---|---|---|
| poly – Tetrahydrofuran (OH – Z. = 55,9) | 178 | 357 |
| DMPA | 28 | 3,8 |
| 1,4 – Dihydroxybutan | 516 | 46,5 |
| TDI | 402 | 70,1 |
| HDI | 408 | 68,7 |
| DBTL | | 0,1 |
| Aceton I | | 133 |
| | | |
| Aceton II | | 533 |
| PUD – Salz (40%ig) | 66 | 28,7 |
| Phenol – Formaldehy – Kondensat, $M_w$ = etwa | | |
| 600 – 1200 Erweichungstemperatur 90 – 110 °C | | 240 |
| Aceton III | | 240 |
| entiontes Wasser | | 1200 |

Vergleichsbeispiel 3

Der Mischung aus entwässertem Polyesterol, hergestellt aus Adipinsäure und Butandiol, DMPA, Trimethylolpropan, Aceton I und Katalysator wurde bei 60 °C das TDI zugegeben. Nach einer Stunde Reaktionszeit bei 65 °C wurde das HDI und zwei weiteren Stunden Reaktionszeit bei 70 °C wurde das Aceton II zugesetzt, die Reaktionsmischung hat dann einen NCO – Gehalt von 0,56 Gew. – %.

Bei 50 °C wurde mit PUD – Salz, das als 40%ige Lösung in Wasser vorlag, kettenverlängert, Nach 5 Minuten wurde die Harzlösung, hergestellt aus Aceton III und einem Phenol – Formaldehyd – Kondensat, zugesetzt und 5 Minuten bei 50 °C gerührt. Anschließend wurde mit Wasser dispergiert und das Aceton abdestilliert.

Die entstandene feinteilige Dispersion hat einen Feststoffgehalt von 41 Gew. – %.

| | Molmenge [mmol] | Gewicht steile [g] |
|---|---|---|
| Polyesterdiol (OH – Z. = 45,2) | 194 | 481 |
| DMPA | 28 | 3,8 |
| Trimethylolpropan | 32 | 4,3 |
| TDI | 172 | 29,7 |
| HDI | 173 | 29,1 |
| DBTL | | 0,1 |
| Aceton I | | 133 |
| | | |
| Aceton II | | 533 |
| PUD – Salz (40%ig) | 66 | 28,7 |
| Phenol – Formaldehyd – Kondensat, $M_w$ = etwa 600 – 1200 Erweichungstemperatur 90 – 110 ° C | | 240 |
| Aceton III | | 240 |
| entiontes Wasser | | 1200 |

Vergleichsbeispiel 4

Der Mischung aus entwässertem Polyesterol, hergestellt aus Adipinsäure und 1,4 – Butandiol, 1,4 – Butandiol, Aceton I und Katalysator wurde das TDI zugegeben. Nach einer Stunde Reaktionszeit bei 65 ° C wurde das HDI zugesetzt und weitere 90 Minuten umgesetzt. Nach Zulauf von Aceton II hat die Reaktions – mischung einen NCO – Gehalt von 0,75 Gew. – %.

Bei 50 ° C wurde mit PUD – Salz, das als 40%ige Lösung in Wasser vorlag, kettenverlängert. Nach 5 Minuten wurde die Harzlösung, hergestellt aus Aceton III und einem Kondensat aus Bisphenol – A und Epichlorhydrin, zugesetzt und 5 Minuten bei 50 ° C gerührt. Anschließend wurde mit Wasser dispergiert und das Aceton abdestilliert.

| | Molmenge [mmol] | Gewichtsteile [g] |
|---|---|---|
| Polyesterdiol ADS/B14 (OH – Zahl: 45,0) | 191 | 476 |
| 1,4 – Butandiol | 72 | 6,5 |
| TDI | 178 | 31,0 |
| HDI | 178 | 30,0 |
| DBTL | | 0,1 |
| Aceton I | | 133 |
| | | |
| PUD – Salz (40%ig) | 94 | 16,4 |
| Aceton II | | 532 |
| Epikote 1007 (Kondensationsharz aus Bisphenol A und Epichlorhydrin, $M_w$ etwa 1550 – 2000) | | 240 |
| Aceton III | | 240 |
| entiontes Wasser | | 1200 |

Beispiele 1 – 4

Zu den jeweiligen Dispersionen der Vergleichsbeispiele 1 – 4 wurde kurz vor den anwendungstechnischen Prüfungen eine 10 gew. – %ige Aufschlämmung von MgO in Wasser gegeben, so daß die Dispersionen 1 Gew. – % MgO bezogen auf den Feststoffgehalt der Dispersion enthielten.

Prüfung der Kontaktverklebung bei Raumtemperatur

Scherfestigkeit:

Die Dispersionen wurden mit 5 Gew. – %, bezogen auf Ihren Feststoffgehalt, pyrogener Kieselsäure angedickt. Mit einem Rakel mit 1 mm – Zahnung wurde die Mischung auf Buchenholzscheiben auf einer Fläche von 150 x 50 $mm^2$ aufgetragen und 60 Minuten bei Raumtemperatur getrocknet. Diese Prüfkörper wurden anschließend verklebt, indem sie 30 Sekunden bei Raumtemperatur mit einem Druck von 0,5 $N/mm^2$ verpreßt wurden. Die Scherfestigkeit wurde sofort und nach 7 Tagen Lagerung bei Raumtemperatur durch die Kraft in $N/mm^2$, welche zum Abziehen der verklebten Buchenholzscheibe in Längsrichtung der Scheiben notwendig war, bestimmt.

Wärmestandfestigkeit:

Eine Hartfaserplatte wurde auf einer Fläche von 200 x 200 $mm^2$ mit einer PVC – Folie verklebt (Kontaktverklebung bei Raumtemperatur). In einem Abschälwinkel von 180 ° C wurde die PVC – Folie mit 300 g belastet. Die Temperatur wurde alle 30 Minuten um 10 ° C erhöht. Die Strecke, die innerhalb dieser 30 Minuten abläuft, wird in mm angegeben.

Klebetechnische Werte

| | Scherfestigkeit sofort/7 Tag [$Nmm^2$] | Wärmestandfestigkeit [ ° C/mm] |
|---|---|---|
| Vergleichsbeispiel 1 | 1,3/4,4 | 40/0, 50/0, 60/1, 70/4, 80/abgelaufen |
| Vergleichsbeispiel 2 | 1,1/2,1 | 40/0, 50/0, 60/0, 70/1, 80/1, 90/5, 100/abgelaufen |
| Vergleichsbeispiel 3 | 1,6/4,9 | 40/0, 50/0, 60/1, 70/1, 80/2, 90/2, 100/8, 110/abgelaufen |
| Vergleichsbeispiel 4 | 1,4/2,5 | 40/0, 50/1, 60/abgelaufen |
| Beispiel 1 | 1,4/4,5 | 40/0, 50/0, 60/0, 70/1, 80/1, 90/1, 100/2, 110/abgelaufen |
| Beispiel 2 | 1,1/2,0 | 40/0, 50/0, 60/0, 70/0, 80/0, 90/1, 100/1, 110/2, 120/abgelaufen |
| Beispiel 3 | 1,4/4,7 | 40/0, 50/0, 60/0, 70/1 80/1, 90/1, 100/2, 110/3, 120/abgelaufen |

**Patentansprüche**

**1.** Wäßrige Dispersionen, enthaltend
A) 45 bis 96,95 Gew. – % eines Polyurethans
B) 3,0 bis 50 Gew. – % eines Phenol – Formaldehyd – Kondensationsharzes oder eines Epoxidharzes und
C) 0,05 bis 5,0 Gew. – % einer anorganischen Verbindung mit einer Löslichkeit in Wasser von weniger als 1 g/l Lösung bei 20 ° C.
wobei sich die Gewichtsprozente auf die Summe der Komponenten A), B) und C) beziehen.

**2.** Wäßrige Dispersionen nach Anspruch 1 enthaltend
A) 96,95 bis 45 Gew. – % eines Polyurethans, welches im wesentlichen aufgebaut ist aus
(a) organischen Polyisocyanaten
(b) Polyhydroxylverbindungen mit einem Molekulargewicht über 500 bis 6000 g/mol, welche keine Ionengruppen oder in ionische Grup –

pen überführbare Gruppen enthalten
(c) gegebenenfalls Verbindungen mit mindestens einer gegenüber Isocyanat reaktiven Gruppe und mindestens einer ionischen oder in eine ionische Gruppe überführbaren Gruppe,
(d) gegebenenfalls nichtionischen Emulgatoren mit mindestens einer gegenüber Isocyanat reaktiven Gruppe,
(e) gegebenenfalls von (c) und (d) verschiedenen Verbindungen mit mindestens zwei gegenüber Isocyanat reaktiven Gruppen und einem Molekulargewicht von 60 bis 500 g/mol,

B) 3,0 bis 50 Gew.-% eines Phenol-Formaldehyd-Kondensationsharzes oder eines Epoxidharzes und

C) 0,05 bis 5,0 Gew.-% einer anorganischen Verbindung mit einer Löslichkeit kleiner 1 g/l Lösung in Wasser bei 20 °C.

wobei sich die Gewichtsprozente auf die Summe der Komponenten A), B) und C) beziehen.

**3.** Verwendung der Dispersionen nach Anspruch 1 als Klebstoffe.

**4.** Klebstoffbeschichtungen, erhältlich unter Verwendung einer Dispersion nach Anspruch 1.

Europäisches Patentamt

# EUROPÄISCHER RECHERCHENBERICHT

Nummer der Anmeldung

EP 92 11 8845

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y<br><br><br><br>D | EP-A-0 382 052 (BASF)<br>* Ansprüche 1-3 *<br>* Seite 3, Zeile 7 - Zeile 19 *<br>* Seite 4, Zeile 45 - Zeile 50 *<br>& DE-A-3 903 538<br>--- | 1-4 | C09J175/04<br>C08K3/00<br>//(C09J175/04,<br>161:06,163:00) |
| Y | EP-A-0 259 679 (BAYER)<br>* Anspruch 1 *<br>* Seite 6, Zeile 54 - Zeile 56 *<br>--- | 1-4 | |
| A | US-A-3 856 741 (J.A. LOVELL ET AL.)<br>* Ansprüche 1-3 *<br>--- | 1 | |
| A | CHEMICAL ABSTRACTS, vol. 79, no. 4, 27. August 1973, Columbus, Ohio, US; abstract no. 43298b,<br>* Zusammenfassung *<br>& SU-A-372 243 (A.M. SHAKHNAZARYAN ET AL.)<br>----- | 1 | |
| | | | **RECHERCHIERTE SACHGEBIETE (Int. Cl.5 )** |
| | | | C09J<br>C09D<br>C08K |

Der vorliegende Recherchenbericht wurde für alle Patentansprüche erstellt

| Recherchenort | Abschlußdatum der Recherche | Prüfer |
|---|---|---|
| DEN HAAG | 08 MAERZ 1993 | VAN PUYMBROECK M. A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)